# EUROPÄISCHE PATENTSCHRIFT

(11) **EP 2 456 532 B1**
(45) Veröffentlichungstag und Bekanntmachung des Hinweises auf die Patenterteilung: **02.09.2015**
(21) Anmeldenummer: 10737265.8
(22) Anmeldetag: 07.07.2010
(51) Int. Cl.: B01D 29/66, B01D 65/08, B01D 65/02

(54) **VERFAHREN ZUM REINIGEN VON FILTERSTRUKTUREN BEI FILTRIERANLAGEN ZUM FILTRIEREN VON FLÜSSIGEN PRODUKTEN**
METHOD FOR CLEANING FILTER STRUCTURES IN FILTRATION INSTALLATIONS FOR FILTERING LIQUID PRODUCTS
PROCÉDÉ DE NETTOYAGE DE STRUCTURES DE FILTRATION D'INSTALLATIONS DE FILTRATION DESTINÉES À FILTRER DES PRODUITS LIQUIDES

(30) Priorität: 23.07.2009 DE 102009034550
(43) Veröffentlichungstag der Anmeldung: 30.05.2012
(73) Patentinhaber: KHS GmbH, 44143 Dortmund (DE)
(72) Erfinder: SANDER, Ulrich, 67549 Worms (DE)
(86) Internationale Anmeldenummer: PCT/EP2010/004143
(87) Internationale Veröffentlichungsnummer: WO 2011/009528

(56) Entgegenhaltungen:
- EP-A1- 0 526 372
- WO-A1-2007/043879
- WO-A2-02/26363
- DE-A1- 4 421 639

## Beschreibung

Die Erfindung bezieht sich auf ein Verfahren gemäß Oberbegriff Patentanspruch 1.

Speziell zum Filtern oder Filtrieren von flüssigen Produkten in Form von Getränken, beispielsweise zum Filtrieren von Bier sind verschiedene Verfahren und nach diesem Verfahren arbeitende Filtrieranlagen bekannt.

Neben den nach der üblichen Anschwemmfiltration arbeitenden Filtrieranlagen, denen das zu filtrierende Produkt (Filtriergut) als ein mit einem Filterhilfsmittel versetztes Unfiltrat zugeführt wird und bei denen die Filterstruktur im Wesentlichen aus der von dem Filterhilfsmittel ausgebildeten Filterschicht oder dem Filterkuchen besteht, kommen im Getränkebereich zunehmend Filtrierverfahren sowie Filtrieranlagen zum Einsatz, bei denen die Filterstruktur als Membranfilterstruktur ausgebildet ist und die keine Filterhilfsmittel im üblichen Sinne benötigen, also eine filterhilfsmittelfreie Filtration ermöglichen. Derartige Membranfiltrationssysteme oder Filtrieranlagen haben grundsätzliche Vorteile, nämlich:
- Einfacher, gut zu automatisierender Prozess
- U.a. geringe Betriebskosten bei entsprechender Filtrierbarkeit des Produktes bzw. Filtriergutes
- Kontinuierliche Arbeitsweise
- Pulver- und staubfreie Arbeitsweise durch Vermeidung von Filterhllfsmitteln, wie z.B. Kieselgur, polymere Filterhilfsmitteln usw.
- Vermeidung einer Filterschlamm-Entsorgung usw.

Diesen Vorteilen stehen allerdings auch Nachteile der Membranfiltrationssysteme bzw. -anlagen gegenüber, nämlich:
- Hohe Investitionskosten
- Lange Regenerationszeiten der jeweiligen Filtrieranlage
- Fehlende Möglichkeit, die Filterstruktur an schwankende Unfiltratqualitäten anzupassen, was bei Anschwemmfiltern durch Dosierung des Filterhilfsmittels möglich wäre
- Unter Umständen hohe Betriebskosten bei schlechter Filtrierbarkeit des Produktes
- U.a. schlechte Anlagenverfügbarkeit dann, wenn eine häufige Regeneration der Filterstruktur bzw, der Filterelemente und deren Membranen erforderlich ist.

Weiterhin gilt, dass oftmals eine Filtration unter Verwendung von Membranfilterstrukturen oder Membranfiltern nicht wirtschaftlich ist, wenn bedingt durch die Unfiltratqualität die Permeabilität der Filterstruktur durch Zusetzen der Membranen mit Unfiltratrückständen bzw. mit Trubstoffen schnell abnimmt. In diesen Fällen ist zumindest ein Rückspülen mit Produkt bzw. Filtrat oder Wasser notwendig, was einen Zeit- und Produktverlust bedeutet, oftmals aber nicht zielführend ist, sodass die gesamte Filtrieranlage stillgesetzt und mit einem Reinigungs- oder Spülmedium regeneriert werden muss.

Nachteilig ist auch, dass die physikalische und chemische Belastung der Filterelemente bzw. deren Membranen während der jeweiligen Regeneration um ein Vielfaches höher ist als während des Filtrationsprozesses, bei dem die Filterelemente und deren Membranen insbesondere auch durch die geringe Anströmung des Filtriergutes nur einer geringen Belastung ausgesetzt sind. Die Lebensdauer der Filterelemente definiert sich daher nicht über die Anzahl der Produktionsstunden, sondern ist in erster Linie durch die Anzahl der Regenerationszyklen bestimmt.

Ein Vorschlag zur Verlängerung der Lebensdauer von Membranen wurde von der EP 0526 372 vorgestellt. Mehr im Detail wurde innerhalb dieser Schrift erkannt, dass die Lebensdauer der Membranen durch Stillstände des Fluidstromes reduziert wird und zwar dadurch, dass sich im Unfiltrat enthaltene Feststoffe während dieser Stillstände besonders intensiv an den Membranen anlagern. Zur Vermeidung dieser Stillstände schlägt diese Schrift vor, dass sowohl die vorgesehene Versorgungspumpe, als auch die vorgesehene Umwälzpumpe kontinuierlich weiter fördern sollen, wobei überflüssige Fördermengen über vorgesehene Abzweige abgefördert werden sollen. Diese Lösung verursacht einen erhöhten Energieverbrauch.

Weiterhin wurde auch die DE 44 21 639 A1 bekannt. Diese Schrift sieht zum Ablösen von an den Membranen anhaftenden Feststoffen eine Druckentlastung vor, wozu mehr im Detail vorgesehen Ist, den Ablauf des Konzentrats durch die Öffnung eines Ventils für einen vorbestimmten Zeitraum zu öffnen. Nachteilig an dieser Lösung ist, dass der so erzielte Druckabfall nur in sehr geringem Maße beeinflusst oder gesteuert werden kann.

Ebenfalls bekannt wurde die WO 2007/043879 A1. Auch diese Schrift befasst sich mit der Reinigung von zur Filtration verwendeten Membranen. Dazu sieht diese Schrift vor, entweder die Überströmgeschwindigkeit durch eine Rezirkulationspumpe anzuheben, oder den Druckkessel zu entspannen. In beiden Fällen wird innerhalb des Membranfiltermoduls eine Druckwelle erzeugt, wodurch sich an den Membranen anhaftende Feststoffe ablösen sollen. Nachteilig ist, dass sich weder durch die Anhebung der Überströmgeschwindigkeit, noch durch die Entspannung des Druckkessels genau definierte und vorherbestimmbare Verhältnisse erzielen lassen.

Aufgabe der Erfindung ist es, ein Verfahren aufzuzeigen, mit welchem eine vereinfachte Reinigung von Filterstrukturen bei Filtrationsanlagen durch Ablösen von Unfiltratrückständen erreichbar ist. Zur Lösung dieser Aufgabe ist ein Verfahren entsprechend dem Patentanspruch 1 ausgebildet.

Bei der Erfindung erfolgt das Reinigen von Filterstrukturen von Filtrationsanlagen bzw, das Ablösen von Unfiltratrückständen durch gesteuertes und forciertes bzw. gesteigertes Ausgasen eines im Unfiltrat gelösten produktneutralen Gases oder Gasgemisches, d.h. durch eine bei diesem Ausgasen erzeugte Gasblasenbildung, die bereits beim Entstehen ein lokales "Absprengen" der Unfiltratrückstände bewirkt, deren Gasblasen aber auch durch ihre Bewegung Unfiltratrückstände ablösen und mitführen.

Das produktneutrale Gas oder Gasgemisch kann ein beliebiges, in dem jeweiligen flüssigen Produkt lösbares und die erwünschten Eigenschaften des Produktes nicht veränderndes oder störendes Gas oder Gasgemisch sein, beispielsweise Co2-Gas, Stickstoff, Edelgas, Sauerstoff usw. Das produktneutrale Gas oder Gasgemisch ist beispielsweise ein Gas oder Gasgemisch, welches in dem zu filtrierenden Produkt oder Filtriergut originär enthalten ist, beispielsweise bei der Herstellung des Filtriergutes entsteht, wie z.B. C02-Gas, und/oder das produktneutrale Gas oder Gasgemisch wird dem Filtriergut bzw. dessen Unfiltrat vor dem Filtrieren zugesetzt. Weist das Produkt ein originäres produktneutrales Gas oder Gasgemisch (beispielsweise CO2-Gas) auf, so ist das zugesetzte Gas oder Gasgemisch identisch mit dem originären produktneutralen Gas oder Gasgemisch.

Bei einer generellen Ausführungsform der Erfindung ist die Filterstruktur eine Membranfilterstruktur, die z.B. von der jeweils als Filtermembrane ausgebildeten Wand von röhrchen- oder hohlfaserartigen Filterelementen gebildet Ist, welche Jeweils als Bündel zu Filterelementen zusammengefasst sind. Bei Filtrationsanlagen mit derartigen Membranfilterstrukturen erfolgt deren Reinigung durch das gesteuerte Ausgasen oder Entbinden beispielsweise während des gesamten Filtrationsprozesses kontinuierlich, und zwar dadurch, dass der Betriebsdruck der Filtrieranlage gesteuert unter dem Sättigungsdruck des produktneutralen Gases oder Gasgemischs im Filtriergut gehalten wird. Weiterhin besteht aber auch die Möglichkeit, das Reinigen durch Ausgasen des produktneutralen Gases periodisch durchzuführen, und zwar beispielsweise in vorgegebenen oder vorgewählten Zeitabständen oder in Zeitabständen, die unter Berücksichtigung der jeweiligen Produktionsdauer und/oder des Volumens des bereits filtrierten Produktes gesteuert werden. Bei dieser Reinigung erfolgt hierbei jeweils ein kurzzeitiges Absenken des Anlagendruckes, beispielsweise um 1 - 3 bar bei einem Anlagendruck zwischen 1 und 10 bar während des normalen Filtrierprozesses. Die Zeitdauer der Druckabsenkung beträgt dabei dann maximal 10sec, bevorzugt maximal 5sec.

Bevorzugt erfolgt die Druckabsenkung derart, dass sich an der Filterstruktur eine geänderte Druckdifferenz ausbildet und zwar derart, dass der Druck an der Filtratseite etwas höher ist als an der Unfiltratseite. Hierdurch kommt es bei der periodischen Druckabsenkung zu einer Filtratströmung durch die Filterstruktur und damit zu einem zusätzlichen Wegschwemmen der durch das Ausgasen gelösten Unfiltratrückstände.

Durch das mit dem gesteuerten Ausgasen des produktneutralen Gases erzielte Reinigen der jeweiligen Membranfilterstruktur können die Zykluszeiten für die Regeneration dieser Filterstruktur bzw. der Membranfilter wesentlich verlängert werden, wodurch sich u.a. eine Erhöhung der Anlagenleistung und -verfügbarkeit sowie insbesondere auch eine Verlängerung der Lebensdauer der Membranfilter bzw. der diese Filter aufweisenden Module ergeben. Weiterhin wird eine wesentliche Reduzierung der Betriebskosten bezogen auf das Volumen des filtrierten Produktes erreicht.

Bei einer weiteren Ausführungsform der Erfindung ist die Filterstruktur eine Anschwemmfilterstruktur einer als Anschwemmfilter oder Kerzenfilter ausgebildeten Filtrieranlage. Das gesteuerte und forcierte bzw. gesteigerte Ausgasen des produktneutralen Gases erfolgt bei dieser Ausführungsform unmittelbar vor dem Ausbringen der die Filterstruktur bildenden Filterschicht oder des Filterkuchens, um dieses Ausbringen zu erleichtern.

Unter "Unfiltratrückstände" sind im Sinne der vorliegenden Erfindung insbesondere die beim Filtrieren aus dem Produkt entfernten Stoffe oder Trubstoffe sowie auch verwendete Filterhilfsmittel mit derartigen beim Filtrieren entfernten Stoffe oder Trubstoffe zu verstehen.

Ist das produktneutrale Gas in dem Filtrat bzw. in dem durch das Filtrieren erhaltene Endprodukt nicht oder aber lediglich in einer reduzierten Konzentration erwünscht, so wird das Filtrat in einer auf die Filtrieranlage folgenden Anlage entsprechend entgast.

Die Erfindung wird im Folgenden anhand der Figuren an Ausführungsbeispielen näher erläutert. Es zeigen:
- Fig. 1: in vereinfachter Funktionsdarstellung eine Filteranlage zum Filtrieren von flüssigen Produkten, insbesondere von Bier oder dergleichen Getränke;
- Fig. 2: in vereinfachter Teildarstellung eines der die Filtermodule der Filtrieranlage der Figur 1 bildenden Filterelemente;
- Fig. 3: in vereinfachter schematischer Darstellung eine weitere Ausführungsform einer Filtrieranlage mit einer von einer Vielzahl von Filterkerzen gebildeten Filterstruktur;

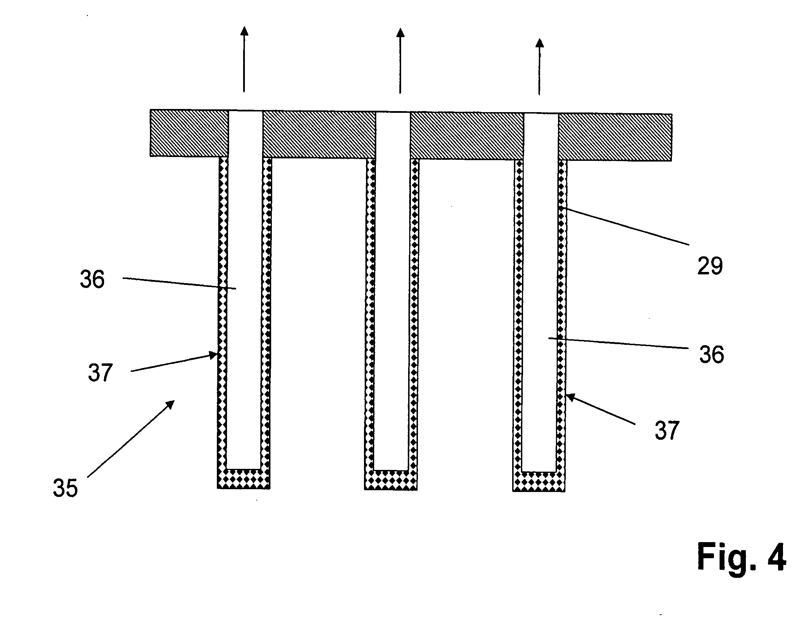

- Fig. 4: in vergrößerter schematischer Darstellung eine der Filterkerzen der Filtrieranlage der Figur 3.

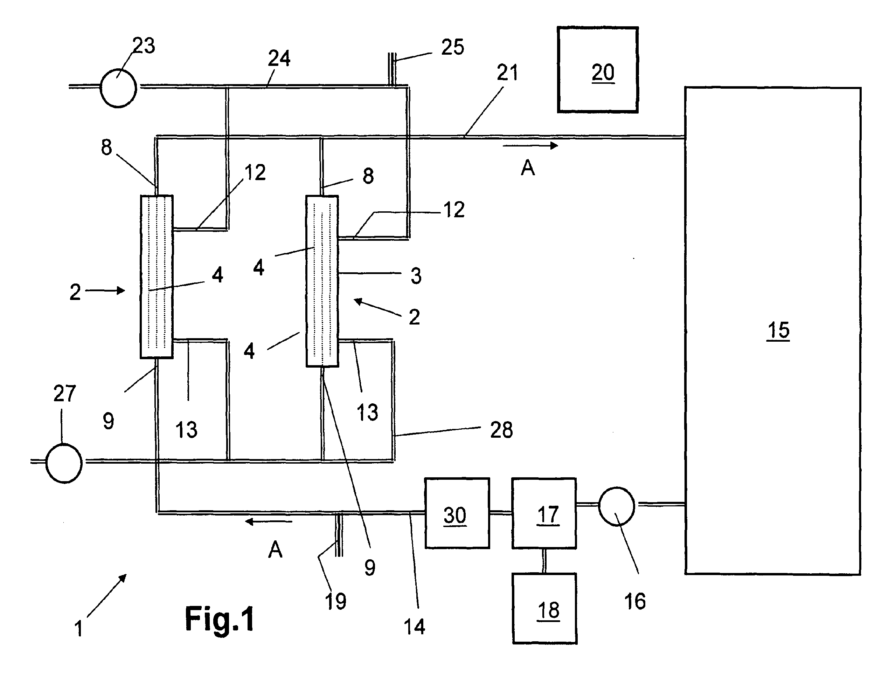

Die in Figur 1 allgemein mit 1 bezeichnete Filtrieranlage dient zum Filtrieren von flüssigen Produkten (Filtriergut), insbesondere von Getränken und dabei bevorzugt von Bier. Die Filtrieranlage 1 umfasst hierfür eine Vielzahl von Filtermodule 2, die in der dem Fachmann bekannten Weise in einem Gehäuse 3 eine Vielzahl von röhrchenförmigen jeweils als Membranfilter ausgeführten Filterelementen 4 aufweisen.

Die einzelnen, das jeweilige Filtermodul 2 bildenden Filterelemente 4 bestehen ihrerseits aus einer Vielzahl von Hohlfasern 4.1 mit einer eine Membran 5 mit Poren 5.1 bildenden Wandung, deren Wandstärke beispielsweise 0,8 bis 1,5 µm beträgt. Diese Hohlfasern 4.1, die sich jeweils über die gesamte Länge des Filterelementes 4 erstrecken, sind zu Bündeln von ca. 2 000 Fasern zusammengefasst und an ihren Enden miteinander sowie mit einem das jeweilige Bündel umschließender Filterelementgehäuse 4.2 vergossen, und zwar derart, dass jede Hohlfaser 4.1 einen beidendig offenen Unfiltratkanal 6 bildet, der während des Filtrationsprozesses von dem Unfiltrat 7 durchströmt wird, und innerhalb des Filterelementgehäuses 4.2 ein die Hohlfasern 4.1 umgebender Filtratraum 11 gebildet ist, der mit einem für sämtliche Filterelemente 4 gemeinsamen, in den Figuren nicht dargestellten Filtratraum oder -kanal des Filtermoduls 2 in Verbindung steht.

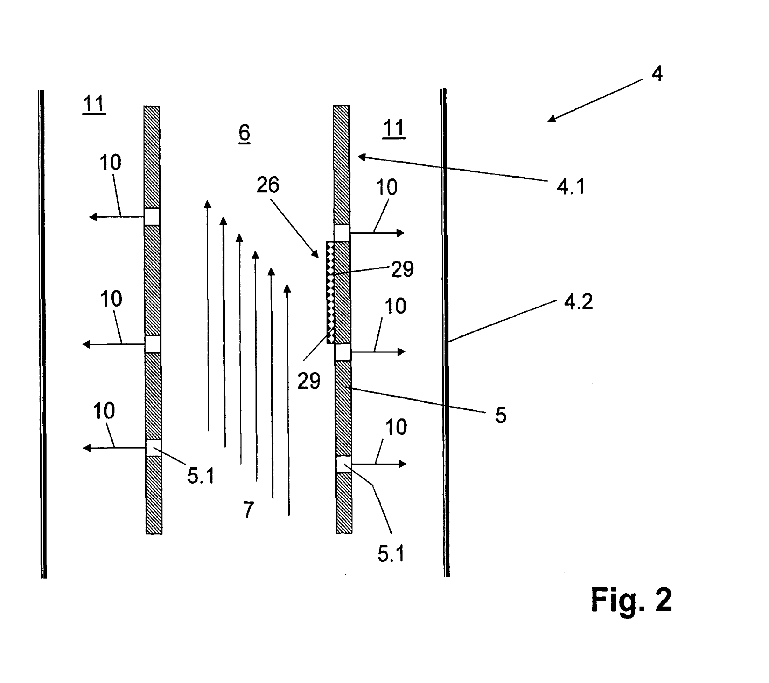

Die Hohlfasern 4.1 bestehen aus einem für Filtermembrane geeigneten Werkstoff, z.B. aus Kunststoff, beispielsweise aus PES (Polyethersulfon) oder PP (Polypropylen). Die Filtration erfolgt an der die Wandung der jeweiligen Hohlfaser 4.1 bildenden Membrane 5. Das hierbei erhaltene, in der Figur 2 mit den Pfeilen 10 angedeutete Filtrat gelangt in den das Hohlfaserbündel umschließenden Filtratraum 11 und von dort in den Filtratkanal des Filtermoduls 2, der bei der dargestellten Ausführungsform zwei Anschlüsse 12 und 13 aufweist.

Sämtliche Filterelemente 4 sind in dem Gehäuse 3 parallel zueinander angeordnet und münden mit dem oberen und unteren Ende ihrer Unfiltratkanäle 6 in Kammern, die den in der Figur 1 oberen und unteren Unfiltratanschluss 8 bzw. 9 des jeweiligen Filtermoduls 2 biiden.

In der Figur 1 sind der einfacheren Darstellung wegen lediglich zwei Filtermodule 2 wiedergeben. In ihrer praktischen Ausführung weist die Filtrieranlage 1 aber beispielsweise mehr als zwei Filtermodule 2 auf. Unabhängig von der Anzahl der Filtermodule 2 sind diese parallel zueinander in einem Unfiltratkreis angeordnet. Dieser umfasst u.a. eine mit den unteren Anschlüssen 9 verbundene Leitung 14 zum Zuführen das Unfiltrats von einer dieses Unfiltrat bereitstellenden Quelle 15. Zur Erzeugung der während des Filtrierbetriebes erforderlichen Strömung des Unfiltrats durch die Filtermodule 2 entsprechend dem Pfeil A ist in der Leitung 14 beispielsweise eine Förderpumpe 16 vorgesehen. Weiterhin ist in der Leitung 14 eine Dosierstrecke 17 vorgesehen, über die dem Unfiltrat dosiert ein produktneutrales Gas oder Gasgemisch aus einer dieses Gas oder Gasgemisch bereitstellenden Quelle 18 beigemischt werden kann, sofern dies erforderlich ist. Das produktneutrale Gas oder Gasgemisch ist beispielsweise C02-Gas, Stickstoff, Edelgas, Sauerstoff usw.

In der Leitung 14 ist weiterhin wenigstens ein Drucksensor 19 vorgesehen, der den aktuellen Druck des Unfiltrats in der Leitung 14, d.h. auf der Unfiltratseite der Filtermodule 2 und der Filtrieranlage 1 erfasst und ein diesem Druck entsprechendes Messsignal an eine Steuereinheit 20 liefert. Die oberen Anschlüsse 8 der Filtermodule 2 sind mit einer Leitung 21 verbunden, über die das Unfiltrat nach dem Durchströmen der Filtermodule 2 an die Quelle 15 zurückgeleitet wird.

Das in den Filtermodulen 2 an der Filtratseite anfallende Filtrat wird über eine an die Anschlüsse 12 angeschlossene und eine Förderpumpe 23 aufweisende Filtratleitung einer weiteren Verwendung und/oder Behandlung zugeführt. Die Filtratleitung 24 ist ebenfalls mit einem Drucksensor 25 versehen, der ein dem aktuellen Druck in der Filtratleitung 24 entsprechendes Signal an die Steuereinrichtung 20 liefert,

Während des normalen Filtrationsprozesses lagern sich unvermeidlich Unfiltratrückstände oder Trubstoffe an der Innenfläche des jeweiligen Unfiltratkanals 6 bzw. an der Innenfläche der Membranen 5 an, wie dies in der Figur 2 mit der Schicht 26 schematisch dargestellt ist, wobei die Unfiltratrückstände oder Trubstoffe die Poren 5.1 der Membranen 5 zunehmend verstopfen. Aus diesem Grunde ist in gewissen Abständen bei unterbrochener Filtration eine Regenerierung der Filtrieranlage 1 und dabei insbesondere der Filtermodule 2 u.a. durch Rückspülen erforderlich, um die Poren 5.1 freizuspülen und die Trubstoffe und deren Beläge 26 von der Innenfläche der Hohlfasern 4.1 abzulösen. Für das Rückspülen sind die Anschlüsse 13 mit einer u.a. eine Förderpumpe 27 aufweisenden Rückspülleitung 28 verbunden.

Wie Eingangs erwähnt, bedeutet die jeweilige Regenerierung eine hohe Belastung der Filterelemente 4 bzw. der Hohlfasern 4.1, sodass die Lebensdauer der Filterelemente 4 weniger durch die normale Betriebszeit der Filtrierenlage 1, sondern vielmehr durch die Anzahl der Regenerationen bestimmt ist. Um die Anzahl der Regenerationen pro Volumenmenge des Filtriergutes zu reduzieren und damit die Lebensdauer der Filterelemente 4 zu erhöhen, erfolgt bei der Filtrieranlage 1 während des laufenden Filtrationsbetriebes periodisch, d.h. beispielsweise in vorgegebenen und gegebenenfalls von der Volumenmenge des filtrierten Produktes abhängigen Zeitintervallen ein Reinigen oder Freisprengen der Membranen 5 bzw. deren Poren 5.1 durch gesteuertes erhöhtes Ausgasen oder Entbinden des produktneutralen Gas oder Gasgemisches aus dem Produkt, beispielsweise aus dem Unfiltrat 7.

Hierfür wird insbesondere dann, wenn das Unfiltrat nicht bereits originär oder aber nur ungenügend mit einem produktneutralen Gas oder Gasgemisch versetzt ist, dieses Gas oder Gasgemisch dem Unfiltrat in der Mischstrecke 17 zugesetzt und zwar derart dosiert, dass es unter Berücksichtigung der Temperatur des Unfiltrats, die beispielsweise im Bereich zwischen -2 und +5°C liegt, und unter Berücksichtigung des Betriebsdrucks der Filtrieranlage 1, d.h. des Drucks des Unfiltrats 7 und des Filtrats 10 im normalen Betrieb der Filtrieranlage 1 nicht, zumindest aber nicht zu einem übermäßigen Entbinden des produktneutralen Gas oder Gasgemisches aus dem Unfiltrat 7 und dem Filtrat 10 kommt.

Ist das produktneutrale Gas oder Gasgemisch in dem Filtrat 6 bzw, in dem Endprodukt nicht erwünscht, so erfolgt ein Entgasen des Filtrats 10 in einer gesonderten an den Filtratauslass angeschlossenen Anlage.

Zum periodischen Reinigen der Filterelemente 4 bzw. der Membranen 5 und der Poren 5.1 wird der Druck in der Filtrieranlage 1 und dabei vorzugsweise der Druck auf der Unfiltratseite dieser Anlage jeweils kurzzeitig unter den Sättigungsdruck des produktneutralen Gas oder Gasgemisches abgesenkt, was durch eine entsprechende Ansteuerung der Förderpumpe zum Zuführen des Unfiltrats 16, 38 erfolgt. Durch diese Druckabsenkung bedingt, erfolgt eine verstärkte Entbindung des produktneutralen Gases oder Gasgemisches mit Bläschenbildung 29 auch innerhalb des von den Trubstoffen gebildeten Belages 26 sowie auch innerhalb der Poren 5,1, sodass die Trubstoffe von der Innenfläche der Hohlfasern 4.1 und aus den Poren 5.1 durch die entstehenden Gasbläschen durch Absprengen entfernt und dann mit dem Unfiltratstrom mitgeführt werden. Nach dem Reinigen wird der Unfiltratdruck oder der Gesamtdruck der Filtrieranlage 1 wieder auf oder über den Sättigungsdruck, angehoben.

Wird bei dem Reinigen lediglich der Unfiltratdruck oder der Druck auf der Unfiltratseite der Filtrieranlage 1 reduziert, so wird hierdurch ein Druckgefälle von der Filtratseite zu der Unfiltratseite erreicht, wodurch zusätzlich zu dem Freisprengen der Poren 5.1 durch das ausgasende produktneutrale Gas oder Gasgemisch auch noch ein Rückströmen von Filtrat auf die Unfiltratseite der Filtrieranlage 1 und damit ein zusätzliches Spülen der Membranen 5 bzw. deren Poren 5.1 erfolgt. Losgelöste Trubstoffe werden durch diesen Filtratrückstrom besonders zuverlässig aus den Poren 5,1 und von der Innenfläche der Hohlfasern 4.1 entfernt.

Je nach Produkt, Temperatur und Anteil an dem produktneutralem Gas oder Gasgemisch wird das Unfiltrat der Filtrieranlage 1 mit einem Druck im Bereich zwischen etwa 1 - 10 bar zugeführt. Die Druckabsenkung für die Reinigung der Filterelemente 4 liegt dann beispielsweise im Bereich zwischen 1 und 3 bar.

Bei der periodischen Reinigung durch Ausgasen erfolgt eine kurzzeitige Druckabsenkung, beispielsweise eine Druckabsenkung über eine Zeitspanne kleiner als 10 sec, bevorzugt über eine Zeitspanne von weniger als 5 sec.

Die Druckabsenkung erfolgt durch eine einfache Druckentlastung der Unfiltratseite der Filtrieranlage 1, durch eine gezielte Steuerung der Pumpe 16. Letzteres ist insbesondere dann in besonders einfacher Weise möglich, wenn der motorische Antrieb der Pumpe 18 ein frequenzgeregelter Elektromotor ist.

Vorstehend wurde davon ausgegangen, dass dem Unfiltrat für das Reinigen der Filterelemente 4 ein produktneutrales Gas oder Gasgemisch zugesetzt wird. Vielfach enthält aber das zu filtrierende Produkt bzw, dessen Unfiltrat bereits originär ein produktneutrales Gas oder Gasgemisch beispielsweise in Form von CO2-Gas, wie dies bei Getränken, insbesondere Bier der Fall ist. In diesen Fällen besteht dann die Möglichkeit, die Reinigung der Filterelemente 4 dadurch zu bewirken, dass die Filtrieranlage 1 im normalen Betrieb mit einem Gesamtanlagendruck, d.h. mit einem Unfiltrat und Filtratdruck betrieben wird, der zumindest etwa dem Sättigungsdruck des C02-Gas im Unfiltrat entspricht. Bei der periodischen Reinigung der Filterelemente 4 bzw. deren Membranen 5 wird dann beispielsweise wiederum durch Steuerung der Leistung der Förderpumpen 16 und 22 der Unfiltratdruck oder aber der Gesamtanlagendruck, d.h. der unfiltratseitige und der filtratseitige Druck der Filtrieranlage 1 unter den aktuellen Sättigungsdruck abgesenkt, sodass in der vorstehend beschriebenen Weise durch die Blaschenbildung 29 des freigesetzten C02-Gases das Entfernen der Trubstoffe an der Innenfläche der Hohlfasern 4.1 und aus den Poren 5 erfolgt. Besonders vorteilhaft ist es auch hier, während der periodischen Reinigung der Filterelemente 4 lediglich den Druck auf der Unfiltratseite abzusenken, um so durch das Druckgefälle zwischen der Filtrat- und der Unfiltratseite einen Filtratrückstrom durch die Membranen 5 zu erreichen, und zwar für ein besonders wirksames Entfernen der Trubstoffe aus den Poren 5.1 und der Beläge 26.

Unabhängig davon, ob eine periodische Reinigung oder aber kontinuierliche Reinigung der Filterelemente 4 durch Freisetzen des produktneutralen Gas oder Gasgemisches erfolgt, besteht auch bei solchen Produkten, deren Unfiltrat bereits das produktneutrale Gas oder Gasgemisch, beispielsweise CO2-Gas oder Gasgemisch enthält, die Möglichkeit, dem Unfiltrat zusätzlich weiteres produktneutrales Gas oder Gasgemisch in der Mischstrecke 17 beizumischen, um so die periodische oder kontinulerliche Reinigung der Filterelemente 2 besonders wirksam zu gestalten.

Das Ablösen der Trubstoffe bzw. der von diesen gebildeten Deckschichten 26 durch die Bläschenbildung 29 wird insbesondere auch dadurch gefördert, dass die Bläschen aufgrund der Strömungsrichtung des Unfiltrats 7 und des Dichteunterschiedes im Unfiltrat nach oben aufsteigen und dadurch die noch auf den Membranen 5 anhaftenden und/oder von den Gas oder Gasgemischbläschen auch aus den Poren 5.1 herausgesprengten bzw. herausgedrückten Trubstoffe mitreißen.

Durch die Reinigung der Filterelemente 4 wird deren Durchlässigkeit der von den Filterelementen 4 gebildeten Filterstruktur wesentlich verbessert. Außerdem werden auch die Zeitspanne zwischen zwei Regenerationsvorgängen und damit die Lebensdauer der Filterelemente 4 wesentlich verbessert sowie die Kosten für die Filtration je Volumeneinheit des zu filtrierenden Produktes entscheidend gesenkt.

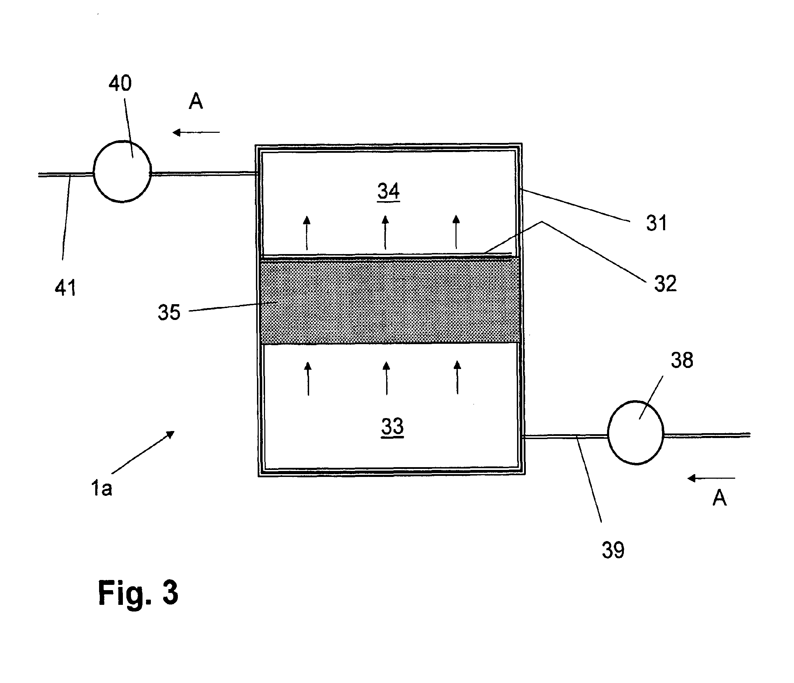

Die Figur 3 zeigt in schematischer Darstellung eine Filtrieranlage 1a, die als Kerzenfilteranlage ausgebildet ist. Die Filtrieranlage 1a besteht dabei in der dem Fachmann bekannten Weise im Wesentlichen aus einem Kessel 31, dessen zumindest während des Filtrierbetriebes nach außen hin dicht verschlossener Innenraum durch eine Zwischenwand 32 in einen unteren Unfiltratraum 33 und einen oberen Filtratraum 34 unterteilt ist. An der Zwischenwand 32 bzw. unterhalb dieser Zwischenwand ist die Filterstruktur 35 gebildet, die in der dem Fachmann bekannten Weise aus einer Vielzahl von Filterkerzen 36 und einem auf diesen Filterkerzen abgeschiedenen Filterkuchen aus einem Filterhilfsmittel besteht.

Das mit dem Filterhilfsmittel versetzte Unfiltrat wird dem Unfiltratraum 33 über eine eine Förderpumpe 38 aufweisenden Leitung 39 in Förderrichtung A zugeführt.

Das Produkt durchströmt die Filterstruktur 35 und gelangt als Filtrat in den Filtratraum 34, aus dem es über eine eine Förderpumpe 40 aufweisende Leitung 41 in Förderrichtung A einer weiteren Verwendung zugeführt wird.

Das dem Unfiltratraum 33 zugeführte Unfiltrat enthält beispielsweise bereits originär ein produktneutrales Gas oder Gasgemisch, z.B. CO2-Gas, oder aber dem Unfiltrat wird vor dem Zuführen an die Filtrieranlage 1a das produktneutrale Gas oder Gasgemisch zugesetzt. Während der normalen Filtration ist der Betriebsdruck der Filtrieranlage 1a, d.h. der Druck im Filtratraum 33 und im Unfiltratraum 34 wenigstens gleich dem Sättigungsdruck, sodass ein Entbinden oder Ausgasen des produktneutralen Gases oder Gasgemisches aus dem Produkt insbesondere auch im Bereich der Filterkerzen 36 oder im Bereich des Filterkuchens 37 und dabei auch im Bereich zwischen der Außenfläche der Filterkerzen 36 und dem Filterkuchen 37 nicht erfolgt.

Erst dann, wenn für ein Regenerieren der Filtrierenlage 1a der Filterkuchen 27 ausgetragen werden soll, erfolgt unmittelbar vorher die Reduzierung des Drucks innerhalb der Filtrieranlage 1a unter den Sättigungsdruck, sodass durch das hierbei auftretende forcierte Ausgasen des Gas oder Gasgemischen aus dem Produkt und dabei insbesondere aus dem Unfiltrat im Unfiltratraum 33 bzw. durch die hierbei erzeugten Gas oder Gasgemischbläschen 29 ein Ablösen des Filterkuchens 37 von den Filterkerzen bewirkt, zumindest aber unterstützt wird.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

## Patentansprüche

1. Verfahren zum Reinigen von Filterstrukturen (4, 35) von Filtrieranlagen (1, 1 a) zum Filtrieren von mit einem produktneutralem Gas oder Gasgemisch versetzten flüssigen Produkten, insbesondere zum Filtrieren von mit dem produktneutralen Gas oder Gasgemisch versetzten Getränken, wobei der Druck des flüssigen Produktes innerhalb der Filtrieranlage (1, 1a) während des Filtrierbetriebes wenigstens einmal unter einen Sättigungsdruck des im flüssigen Produkt enthaltenen produktneutralen Gases oder Gasgemisches entlastet wird, und zwar zur Erzeugung eines Unfiltratrückstände aus der Filterstruktur (4, 35) ablösenden gesteuerten und forcierten bzw. gesteigerten Ausgasens des produktneutralen Gases oder Gasgemisches, **dadurch gekennzeichnet, dass** die Druckentlastung durch gezielte Steuerung einer Förderpumpe zum Zuführen des Unfiltrats erfolgt.

2. Verfahren nach Anspruch 1, **dadurch gekennzeichnet, dass** die Filtrieranlage (1, 1a) eine durch die wenigstens eine Filterstruktur (4, 35) getrennte Unfiltratseite und Filtratseite aufweist, und dass die Druckentlastung für die Reinigung der Filterstruktur (4, 35) auf der Unfiltratseite erfolgt.

3. Verfahren nach Anspruch 1 oder 2, **dadurch gekennzeichnet, dass** dem Unfiltrat das produktneutrale Gas oder Gasgemisch vor dem Zuführen an die Filterstruktur (4, 35) zugemischt wird.

4. Verfahren nach einem der vorhergehenden Ansprüche, **dadurch gekennzeichnet, dass** das Unfiltrat ein das produktneutrale Gas originär enthaltendes Produkt ist.

5. Verfahren nach einem der vorhergehenden Ansprüche, **dadurch gekennzeichnet, dass** das produktneutralen Gas CO2-Gas und/oder Stickstoff und/oder Edelgas und/oder Sauerstoff ist.

6. Verfahren nach einem der vorhergehenden Ansprüche, **dadurch gekennzeichnet, dass** das Unfiltrat der Filtrieranlage (1, 1a) gekühlt, vorzugsweise mit einer Temperatur Im Bereich zwischen -2°C und +5°C zugeführt wird.

7. Verfahren nach einem der vorhergehenden Ansprüche, **dadurch gekennzeichnet, dass** die Druckabsenkung 1 - 4 bar beträgt.

8. Verfahren nach einem der vorhergehenden Ansprüche, **dadurch gekennzeichnet, dass** die Dauer der Druckabsenkung maximal 10 sec, bevorzugt maximal 5 sec beträgt.

9. Verfahren nach einem der vorhergehenden Ansprüche, **dadurch gekennzeichnet, dass** bei Ausbildung der Filterstruktur als Membranfilterstruktur (4) die Druckentlastung zur Reinigung der Filterstruktur während des Filtrierbetriebes periodisch erfolgt, beispielsweise in Zeitabständen die fest vorgegeben oder frei wählbar sind oder in Abhängigkeit von der filtrierten Filtriergutmenge gesteuert werden.

10. Verfahren nach einem der vorhergehenden Ansprüche, **dadurch gekennzeichnet, dass** die Druckentlastung durch eine Druckentlastungseinrichtung, vorzugsweise durch eine an der Unfiltratseite (6, 33) vorgesehenen Druckentlastungseinrichtung erfolgt.

11. Verfahren nach einem der vorhergehenden Ansprüche, **dadurch gekennzeichnet, dass** bei Ausbildung der Filterstruktur (35) als Anschwemmfilterstruktur mit einer von einem Filterhilfsmittel gebildeten Filterschicht oder -kuchen die Druckentlastung zum Entfernen oder Lösen der Unfiltratrückskände bzw. der diese Rückstände enthaltenden Filterschicht durch Ausgasen des produktneutralen Gases oder Gasgemisches vor dem Regenerieren der Filtrieranlage, d.h. vor dem Ausbringen der Filterschicht bzw. des Filterkuchens erfolgt.

## Claims

1. Method for cleaning filter structures (4, 35) in filtration installations (1, 1 a) for filtering liquid products containing a gas or gas mixture that is neutral to the product, in particular for filtering drinks containing the gas or gas mixture that is neutral to the product, wherein the pressure of the liquid product inside the filter installation (1, 1 a) during the filtering operation is relieved at least once under a saturation pressure of the gas or gas mixture contained in the liquid product and neutral to the product, and specifically for the production of an unfiltrate residue from the bleeding of the gas or gas mixture that is neutral to the product which is released from the filter structure (4, 35) in a controlled manner and forced or increased, **characterised in that** the pressure relief takes place by the specific controlling of a delivery pump to conduct the unfiltrate.

2. Method according to claim 1, **characterised in that** the filtration installation (1, 1 a) comprises an unfiltrate side and a filtrate side, separated by at least one filter structure (4, 35), and that the pressure relief for the cleaning of the filter structure (4, 35) takes place on the unfiltrate side.

3. Method according to claim 1 or 2, **characterised in that** the gas or gas mixture neutral to the product is mixed into the unfiltrate before it is conducted to the filter structure (4, 35).

4. Method according to any one of the preceding claims, **characterised in that** the unfiltrate is a product which originally contains the gas that is neutral to the product.

5. Method according to any one of the preceding claims, **characterised in that** the gas that is neutral to the product is CO₂ gas and/or nitrogen and/or noble gas and/or oxygen.

6. Method according to any one of the preceding claims, **characterised in that** the unfiltrate is conducted to the filtration installation (1, 1 a) cooled, preferably at a temperature of between -2 °C and +5 °C.

7. Method according to any one of the preceding claims, **characterised in that** the pressure reduction amounts to 1 - 4 bar.

8. Method according to any one of the preceding claims, **characterised in that** the duration of the pressure reduction is a maximum of 10 seconds, and preferably a maximum of 5 seconds.

9. Method according to any one of the preceding claims, **characterised in that**, with the filter structure formed as a diaphragm filter structure (4), the pressure relief for the cleaning of the filter structure during the filtering operation takes place periodically, for example, at time intervals which are definitely specified or freely selectable, or are controlled as a function of the filter material being filtered.

10. Method according to any one of the preceding claims, **characterised in that** the pressure relief takes place by means of a pressure relief device, preferably by a pressure relief device provided on the unfiltrate side (6, 33).

11. Method according to any one of the preceding claims, **characterised in that**, with the filter structure (35) formed as a precoat filter structure with a filter layer or filter cakes forming the filter aid, the pressure relief for the removing or releasing the unfiltrate residues or, respectively, the filter layer containing these residues, takes place by bleeding the gas or gas mixture, neutral to the product, before the regeneration of the filtration installation, i.e. before bringing out the filter layer or filter cake respectively.

## Revendications

1. Procédé pour nettoyer des structures de filtration (4, 35) d'installations de filtration (1, 1 a) pour filtrer des produits liquides mélangés à un gaz ou à un mélange de gaz neutre par rapport au produit, en particulier pour filtrer des boissons mélangées au gaz ou au mélange de gaz neutre par rapport au produit, sachant que la pression du produit liquide est déchargée à l'intérieur de l'installation de filtration (1, 1a) pendant le fonctionnement du filtre au moins une fois en-dessous d'une pression de saturation du gaz ou de mélange de gaz neutre par rapport au produit, contenu dans le produit liquide, et à pour produire un dégagement de gaz du mélange de gaz neutre par rapport au produit commandé et forcé ou accru, séparant des résidus de produit non filtré de la structure de filtration (4, 35), **caractérisé en ce que** la décharge de pression est effectuée par une commande ciblée d'une pompe de refoulement pour amener le produit non filtré.

2. Procédé selon la revendication 1, **caractérisé en ce que** l'installation de filtration (1, 1a) présente un côté de produit non filtré séparé par la structure de filtration (4, 35) au moins au nombre de une et un côté de produit filtré, et **en ce que** la décharge de pression en vue du nettoyage de la structure de filtration (4, 35) est effectuée sur le côté de produit non filtré.

3. Procédé selon la revendication 1 ou 2, **caractérisé en ce que** le gaz ou le mélange de gaz neutre par rapport au produit est mélangé au produit non filtré avant qu'il soit amené à la structure de filtration (4, 35).

4. Procédé selon l'une quelconque des revendications précédentes, **caractérisé en ce que** le produit non filtré est un produit contenant à l'origine le gaz neutre par rapport au produit.

5. Procédé selon l'une quelconque des revendications précédentes, **caractérisé en ce que** le gaz neutre par rapport au produit est du CO₂ et/ou de l'azote et/ou du gaz inerte et/ou de l'oxygène.

6. Procédé selon l'une quelconque des revendications précédentes, **caractérisé en ce que** le produit non filtré est amené à l'installation de filtration (1, 1a) refroidi, de préférence à une température située dans la plage comprise entre -2 °C et +5 °C.

7. Procédé selon l'une quelconque des revendications précédentes, **caractérisé en ce que** la baisse de pression est de l'ordre de 1 à 4 bar.

8. Procédé selon l'une quelconque des revendications précédentes, **caractérisé en ce que** la durée de la baisse de pression est au maximum de 10 secondes, de préférence au maximum de 5 secondes.

9. Procédé selon l'une quelconque des revendications précédentes, **caractérisé en ce que** lors de la réalisation de la structure de filtration en tant que structure de filtration à membrane (4), la décharge de pression est effectuée de manière périodique au cours du mode de filtration en vue du nettoyage de la structure de filtration, par exemple à des intervalles de temps, qui sont spécifiés au préalable de manière fixe ou qui peuvent être choisis librement ou qui sont commandés en fonction de la quantité filtrée de produit à filtrer.

10. Procédé selon l'une quelconque des revendications précédentes, **caractérisé en ce que** la décharge de pression est effectuée par un dispositif de décharge de pression, de préférence par un dispositif de décharge de pression prévu au niveau du côté de produit non filtré (6, 33).

11. Procédé selon l'une quelconque des revendications précédentes, **caractérisé en ce que** lors de la réalisation de la structure de filtration (35) sous la forme d'une structure de filtration à couches comprenant une couche ou un gâteau de filtration formé(e) par un moyen auxiliaire de filtration, la décharge de pression servant à éliminer ou à détacher les résidus de produit non filtré ou la couche de filtration contenant lesdits résidus est effectuée par des dégagements de gaz du gaz ou du mélange de gaz neutre par rapport au produit avant la régénération de l'installation de filtration, en d'autres termes avant le retrait de la couche ou du gâteau de filtration.
